# EUROPÄISCHE PATENTSCHRIFT

(11) **EP 1 478 677 B1**
(45) Veröffentlichungstag und Bekanntmachung des Hinweises auf die Patenterteilung: **23.03.2005**
(21) Anmeldenummer: 03770944.1
(22) Anmeldetag: 19.09.2003
(51) Int. Cl.: C08G 63/78, B01J 3/00, B01J 19/00, B01J 19/18

(54) **VERFAHREN UND VORRICHTUNG ZUR KONTINUIERLICHEN HERSTELLUNG VON POLYESTERN**
METHOD AND DEVICE FOR THE CONTINUOUS PRODUCTION OF POLYESTERS
PROCEDE ET DISPOSITIF DE PRODUCTION EN CONTINU DE POLYESTERS

(30) Priorität: 02.10.2002 DE 10246251
(43) Veröffentlichungstag der Anmeldung: 24.11.2004
(73) Patentinhaber: Zimmer AG, 60388 Frankfurt am Main (DE)
(72) Erfinder: WILHELM, Fritz, 61184 Karben (DE); REISEN, Michael, 60316 Frankfurt am Main (DE)
(74) Vertreter: Meyer-Dulheuer, Karl-Hermann, Dr.
(86) Internationale Anmeldenummer: PCT/EP2003/010444
(87) Internationale Veröffentlichungsnummer: WO 2004/033526

(56) Entgegenhaltungen:
- EP-A- 0 088 896
- DE-A- 3 107 657
- DE-A- 4 415 220

## Beschreibung

Die Erfindung betrifft ein Verfahren und eine Vorrichtung zur kontinuierlichen Herstellung von Polyestern (PES) durch Ver-/Umesterung von Dicarbonsäuren oder Dicarbonsäureestern mit Diolen, vorzugsweise von Polyethylentheraphthalat (PET), ausgehend von Terephthalsäure (PTA) oder Dimethyltherephthalat (DMT) und Ethylenglykol (EG), in wenigstens einer Reaktionsstufe, Vorpolykondensation des Ver-/Umesterungsprodukts unter Vakuum mittels einer aus einem vertikalen Reaktor bestehenden Reaktionsstufe und Polykondensation des Vorpolykondensationsprodukts in wenigstens einer Polykondensationsstufe.

Für die kontinuierliche Herstellung von PET werden PTA oder Dimethyltherephthalt (DMT) und EG als Ausgangsstoffe eingesetzt. PTA wird mit EG und einer Katalysatorlösung zu einer Paste gemischt und einer ersten Reaktionsstufe zur Veresterung aufgegeben, in der die Veresterung bei Atmosphären- oder Überatmosphärendruck unter Abspaltung von Wasser erfolgt. Wenn DMT eingesetzt wird, werden die DMT-Schmelze und der Katalysator zusammen mit dem EG einer ersten Reaktionsstufe zur Umesterung zugeleitet, in der die Reaktion bei Atmosphärendruck unter Abspaltung von Methanol (MeOH) erfolgt. Der Produktstrom der Ver-/Umesterung wird einer Reaktionsstufe zur Vorpolykondensation, die im Regelfall unter Vakuum durchgeführt wird, zugeleitet. Der Produktstrom der Vorpolykondensation wird in eine Reaktionsstufe zur Polykondensation eingetragen. Die erhaltene Polyesterschmelze wird direkt zu Fasern oder zu Chips verarbeitet.

Das konventionelle Verfahren zur Herstellung von PES besteht aus jeweils zwei Rührstufen zur Veresterung und Vorpolykondensation und einem liegenden Kaskadenreaktor zur Polykondensation, der eine sumpfseitige Kammerung und ein mit senkrechten Loch- oder Ringscheiben bestücktes Rührwerk auf einer waagerechten Welle zum Zwecke einer definierten Oberflächenerzeugung beinhaltet. Die Nachteile dieses Verfahrens sind insbesondere darin zusehen, dass im Kaskadenreaktor bei ausreichend großen Durchsätzen vergleichsweise hohe, für die Qualität nachteilige Temperaturen von 284 bis 288 °C auftreten. Das in der ersten Rührstufe der Vorpolykondensation zur Vermeidung von Schaumbildung und Tröpfchenflug (Entrainment) angelegte Vakuum ist auf p ≥ 50 mbar begrenzt. Ebenso ist die Viskosität des Vorpolykondensationsprodukts auf einen Bereich von 0.20 bis 0.24 IV begrenzt. Nachteilig ist ferner der erhöhte Gasanfall in dem die Polykondensationsstufe bildenden Kaskadenreaktor. Der Einsatz eines liegenden Kaskadenreaktors anstelle der zweiten Rührstufe zur Vorpolykondensation gestattet eine hohe Flexibilität der PES-Herstellung bei vergleichsweise niedrigeren Temperaturen von 277 bis 283 °C im Kaskadenreaktor zur Polykondensation und einer gesteigerten Viskosität des Vorpolykondensationsprodukts von 0.27 bis 0.31 IV sowie beste Möglichkeiten zur Erhöhung der Anlagenkapazität (Schumann, Heinz-Dieter: Polyester producing plants; principles and technology. Landsberg/Lech: Verl. Moderne Industrie, 1996, S. 27 bis 33). Nachteilig bleiben jedoch die hohen Investitionskosten für die Betriebsausrüstung und das Betriebsgebäude.

Bei einer Anlage, bestehend aus zwei Rührbehältern zur Veresterung, einem Etagenreaktor zur Vorpolykondensation und einem liegenden Kaskadenreaktor zur Polykondensation, ergibt sich bei relativ geringem Aufwand eine vergleichbare Stabilität und Flexibilität der Polyester-Herstellung allerdings mit dem Nachteil, dass sich die Abmessungen der Reaktoren der Vorpolykondensations- und der Polykondensationsstufe wegen erhöhter Brüdenvolumina vergrößern und die zulässigen Transportabmessungen bereits bei mittleren Anlagekapazitäten erreicht werden.

Bei dem in der DE-C-4415220 beschriebenen Verfahren zur Herstellung von PET mittels vier Reaktionsstufen wird jeweils ein stehender Reaktor zur Nachveresterung und Vorpolykondensation benutzt. Der Reaktor besitzt in seinem anfänglichen oberen Bereich einen nach oben offenen spiralförmigen Kanal mit wandseitiger Produktaufgabe, der von außen nach innen verlaufend über einen zentralen Überlauf mit einem bodenseitigen gerührten Produktsumpf kommuniziert, wobei der Kanalboden in Strömungsrichtung kontinuierlich ansteigt, so dass die Tiefe des Produktstroms stetig abnimmt. Die Beheizung des Produktstroms erfolgt mit Hilfe einzelner, sich anfänglich in Abständen wiederholender Heizkörper und optional über die Kanalwandungen. Durch den in Strömungsrichtung ansteigenden Kanalboden wird eine selbständige Systementleerung in Strömungsrichtung verhindert mit der Folge von Rückstandsbildungen, Qualitätsverschlechterung oder Produktverlusten, insbesondere bei betrieblichen Störfällen oder beim Stillsetzen der Produktionsanlage. Infolge der mit einem einzelnen Kanalboden begrenzten Ausdampffläche wird das Betriebsvakuum entweder eingeschränkt, die Betriebstemperatur gesteigert, die Farbqualität des erzeugten Produkts gemindert oder es besteht bei erhöhtem Vakuum die Gefahr einer überhöhten Dampfgeschwindigkeit und eine für eine störungsfreie Kondensation kritische Tröpfchenbildung; dieser Effekt wird zusätzlich durch lokal konzentrierte Heizkörper im Strömungskanal verstärkt.

Die US-A-5464590 offenbart eine stehenden Polymerisationsreaktor mit mehreren vertikal übereinander angeordneten Böden, die jeweils zwei nach oben offene Strömungskanäle und am jeweiligen Kanalende ein Überlaufwehr mit anschließender Bodenaussparung zur vertikalen Produktübergabe in Form eines frei fallenden Films auf den Folgeboden aufweisen. Der Kanal besitzt die Gestalt einer angenähert ringförmigen doppelten Schleife, wobei die jeweils erste Schleife in die zweite gegenläufige Schleife halbkreisförmig umgelenkt wird. Das flüssige Polymer durchströmt die Kanäle von oben nach unten in freier Bewegung. Die Dämpfe strömen zwischen den Böden jeweils zur Mitte des Reaktors und entweichen über zentrale Bodenöffnungen bis zum Brüdenabgang am Reaktordeckel. Eine niedrige Füllhöhe auf den Böden und eine auf den Bodenbereich beschränkte Heizung bedeuten für die Vorpolykondensation von Veresterungsprodukten mit eingeschränkten Polymergraden von 4.5 bis 7.5 ein Defizit an Verweilzeit mit der Folge, dass entweder die Zahl der Böden oder die Abmessungen des Reaktors vergrößert werden müssen. Ein weiterer Nachteil ist darin zusehen, dass durch den Einbau von Leitkörpern und freien Fallfilmzonen Reaktionsraum verloren geht. Durch die horizontale Anordnung der Kanalböden und durch die Überlaufwehre sind ein rückstandfreier Dauerbetrieb des Reaktors und/oder seine vollständige Entleerbarkeit nicht gewährleistet.

Die gleichen Nachteile ergeben sich auch bei dem in der US-A-5466419 dargestellten Polymerisationsreaktor, bei dem das dem ersten Ringkanal aufgegebene Produkt in zwei Teilströme aufgespalten wird, die jeweils bis zur Strömungsumkehr und dem Überlaufwehr bzw. dem Produktablauf zwei Halbkreisschleifen und eine halbierte Wegstrecke durchströmen, d.h. bei vergleichbarem Kanalquerschnitt ist die Strömungsgeschwindigkeit ebenfalls halbiert und das hydrostatische Druckgefälle reduziert

Aufgabe der vorliegenden Erfindung ist es, beim eingangs beschriebene Verfahren zur Herstellung von PES die Vorpolykondensation in einer Reaktionsstufe durchzuführen und gleichzeitig die Viskosität des Vorpolykondensationsprodukts auf 0.24 bis 0.26 IV bei geringeren Prozeßtemperaturen von 268 bis 275 °C in der Vorpolykondensationsstufe und 276 bis 282 °C in der Polykondensationsstufe sowie einem niedrigeren Vakuum von 7 bis 18 mbar zu erhöhen. Ferner sollen sich Schaumbildung und Tröpfchenflug einfach beherrschen lassen.

Gelöst ist diese Aufgabe dadurch, dass das in den Reaktor, in dem ein Druck von 10 bis 40 % des Diol-Gleichgewichtsdrucks des den Reaktor verlassenden Vorpolykondensationsprodukts herrscht, zulaufende Ver-/Umesterungsprodukt in freier Bewegung nacheinander zunächst wenigstens eine aus einer Rinne gebildete erste Reaktionszone unter begrenzter Erwärmung mit konstanter Produkthöhe durchströmt, danach in den radial außen oder radial innen liegenden Ringkanal wenigstens einer aus einer in mehrere konzentrische Ringkanäle unterteilte ringförmige Rinne gebildeten zweiten Reaktionszone eingetragen, mit konstanter Produkthöhe nacheinander durch die Ringkanäle zum Auslaß und dann in eine gerührte am Boden des Reaktors befindliche dritte Reaktionszone geleitet wird. Durch die Anordnung einer ersten und zweiten Reaktionszone wird eine hinreichend große Ausdampffläche und damit eine Einschränkung der Dampfbelastung erreicht.

Der sich aus hydrostatischem Druck und dem Betriebsdruck ergebenden Gesamtdruck des Reaktionsprodukts am Boden der Rinnen der ersten und zweiten Reaktionszone ist kleiner als der lokale Diol-Gleichgewichtsdruck der Polykondensationsstufe und liegt bei 5 bis 80%, vorzugsweise bei 10 bis 70 %, des Diol-Gleichgewichtsdrucks. Dadurch lassen sich auf relativ einfache Weise reproduzierbare Polykondensationsbedingungen erzielen. Für den EG-Gleichgewichtsdruck gilt: p_{GL} = 4 p_{S,T} [(DP)² -1]⁻¹, wobei mit p_{S,T} der EG-Dampfdruck und mit DP der Polymerisationsgrad bezeichnet sind.

Bei vergleichbaren relativen Gesamtdrücken ist die Produkthöhe in den Ringkanälen der zweiten Reaktionszone gegenüber derjenigen in der Rinne der ersten Reaktionszone um den Faktor 2 bis 3.5 niedriger:

Üblicherweise werden die in den drei Reaktionszonen gebildeten Brüden aus dem Reaktor gemeinsam abgezogen. Eine vorzugsweise Ausgestaltung der Erfindung besteht darin, die Brüden der ersten Reaktionszone einer Abscheidevorrichtung für die mitgerissenen Produkttröpfchen zuzuführen, bevor diese mit den Brüden der beiden andern Reaktionszonen vereinigt werden. Durch diese Maßnahme läßt sich das Schaum- und Tröpfchenproblem beherrschen.

Die Strömung in der die erste Reaktionszone bildenden Rinne kann wegen der heftigen Gasentwicklung bis etwa zur Hälfte des Strömungswegs als turbulent angesehen werden. Mit dem Nachlassen der Gasbildung und dem Anstieg der Zähigkeit des Produktstroms stellt sich dann spätestens im letzten Drittel des Strömungswegs eine laminare Strömung ein. Nach der Ähnlichkeitstheorie von Strömungen in offenen Gerinnen ist die Strömung des Produktstroms in den Ringkanälen der zweiten Reaktionszone laminar. Um bei laminarer Strömung die Ausbildung einer schnelleren Kernströmung und einer langsameren Randströmung am Boden und an den Wänden der Rinne der ersten Reaktionszone sowie den Ringkanälen der zweiten Reaktionszone zu vermeiden, ist es nach einem weiteren Erfindungsmerkmal erforderlich, die Geschwindigkeit der Kernströmung zu drosseln bzw. diejenige der Randströmung zu beschleunigen.

Im Rahmen der weiteren Ausgestaltung der Erfindung wird der Produktstrom parallel gleichläufig oder parallel gegenläufig durch die Ringkanäle der zweiten Reaktionsstufe geleitet.

Bei der Vorrichtung zur Durchführung des Verfahrens ist zur begrenzten kontrollierten Erwärmung des Produktstroms in der Rinne der ersten Reaktionszone ein in Strömungsrichtung verlaufendes Heizregister angeordnet, dessen Rohre in quer zur Strömungsrichtung angebrachten Kammerblechen bei bodenfreiem und/oder wandfreiem Durchgang gehaltert sind. Durch diese Kammerbleche wird die axiale Geschwindigkeit des Produktstrom in den freien Randzonen gedrosselt und im Bereich des Heizregisters und am Boden relativ beschleunigt. Umgekehrt wird durch Strömungseinbauten in den nachfolgenden laminaren Gerinneströmungen die rand- und bodenseitig langsamere Geschwindigkeit beschleunigt und in der rascheren Kernströmung gebremst.

Im Rahmen der besonderen Ausgestaltung der Vorrichtung ist über der Rinne der ersten Reaktionszone ein geschlossener Brüdensammelraum angebracht, dessen Austrittsöffnung mit einer Abscheidevorrichtung, vorzugsweise mit einer zyklonartigen Gasführung, für die mitgerissenen Produkttröpfchen verbunden ist.

Um eine Konstanz der Produktniveaus in der Rinne der erste Reaktionszone und in den Ringkanälen der zweiten Reaktionszone zu erreichen, sind nach einem zusätzlichen Erfindungsmerkmal am Ende der Rinnen bzw.. der Ringkanäle Überströmstaubleche oder Überströmrohre angebracht, wobei es zur Vermeidung von Abscheideeffekten bzw. Rückständen zweckmäßig ist, jedem Überstromblech und jedem Unterstromblech ein Steigrohr vorzuschalten.

Damit beim Abstellen der Vorrichtung zur Herstellung von PES eine selbsttätige und vollständige d.h. rückstandsfreie Entleerung der Rinne der ersten Reaktionszone und der Ringkanäle der zweiten Reaktionszone des Reaktors möglich ist, ist nach einem weiteren Erfindungsmerkmal an deren Ende unter mehreren möglichen Konzepten jeweils die Anordnung eines Schwanenhalsaustrags am tiefsten Punkt des Bodens vorgesehen.

Ein weiteres erfindungsgemäßes Merkmal ist, zusätzlich an den Enden von Rinne und/oder Ringkanälen in der hintersten toten Ecke am tiefsten Punkt des Bodens ein Drainagerohr oder zwischengeschaltete Drainageöffnungen anzuordnen, um eine Ansammlung von Rückständen zu vermeiden.

Zweckmäßigerweise ist der Boden der Rinne der ersten Reaktionszone und/oder derjenige der die Ringkanäle der zweiten Reaktionszone bildenden Rinne 0.5 bis 6°, 1 bis 4 ° zur horizontalen Ebene geneigt.

Eine Ausgestaltung der Vorrichtung besteht darin, dass der Rührer für die dritte Reaktionszone ein bodenläufiger Impeller, ein Finger-, Rahmen- oder Trommelrührer mit jeweils senkrechter Antriebsachse ist.

Der Rührer für die dritte Reaktionszone kann alternativ Bestandteil einer Drehscheibenkaskade oder eines Käfigreaktors mit jeweils horizontaler Antriebsachse sein. Die Drehscheibenkaskade besteht aus Loch-, Ring- oder Vollscheiben, wobei der Einlaß für das Reaktionsprodukt je zur Hälfte an den axialen Enden und der gemeinsame Auslaß in der Mitte angebracht sind. Es besteht auch die Möglichkeit, bei einer Drehscheibenkaskade mit Lochscheiben den Einlaß für das Reaktionsprodukt an dem einen und den Auslaß an dem gegenüberliegenden Ende anzuordnen.

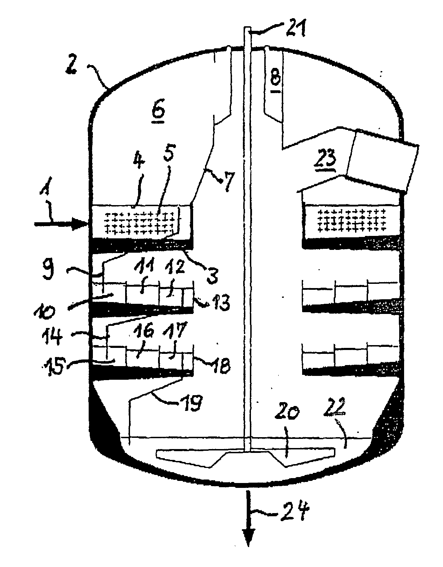

Die Erfindung ist in der Zeichnung beispielhaft dargestellt und wird nachstehend erläutert.

Wie in dem Längsschnitt wiedergegeben wird über Leitung 1 ein Veresterungsprodukt zur Vorpolykondensation dem senkrechten Reaktionsbehälter 2 in die darin angeordnete radial umlaufende die erste Reaktionszone bildende Rinne 3 zugeführt. In der Rinne 3 befindet sich ein Heizregister 4, dessen Rohre 5 konzentrisch angeordnet sind, wobei zur Bildung eines Brüdensammelraums 6 die Rinne nach oben durch eine zwischen radialer Rinnenaußenwand und Reaktorbehälter 2 konzentrisch umlaufende Wand 7 abgeschlossen ist. Die aus dem Brüdensammelraum 6 mitgerissenen Produkttröpfchen werden in der zyklonartigen Abscheidevorrichtung 8 abgetrennt. Das die Rinne 3 verlassende Produkt wird über eine Überlaufrohr 9 am Anfang eines außen liegenden Ringkanals 10 und danach zwei weitere Ringkanäle 11, 12 umfassenden, den ersten Abschnitt 13 der zweiten Reaktionszone bildenden Rinne, aufgegeben. Nach Durchströmen der Ringkanäle 10, 11, 12 wird das Produkt am Ende des innen liegenden Ringkanals 12 durch eine Überlaufrohr 14 ausgetragen und in den außen liegenden Ringkanal 15 einer zwei weitere Ringkanäle 16, 17 umfassenden den zweiten Abschnitt 18 der zweiten Reaktionszone bildenden Rinne eingetragen. Am Ende des innen liegenden Ringkanals 17 wird des Produkt über das Überlaufrohr 19 abgeleitet und dem die dritte Reaktionszone bildenden, mittels eines Impellers 20 mit senkrechter Antriebsachse 21 gerührten Sumpf 22 zugeführt. Die in den drei Reaktionszonen entstehenden Brüden werden über die Leitung 23 nach außen geleitet. Das Vorpolykondensationsprodukt wird über die Leitung 24 aus dem Sumpf 22 ab- und der nicht dargestellten Polykondensationsstufe zugeführt.

## Patentansprüche

1. Verfahren zur kontinuierlichen Herstellung von Polyestern (PES) durch Ver-/Umesterung von Dicarbonsäuren, vorzugsweise Terephthalsäure, bzw. Estern der Dicarbonsäuren mit Diolen, vorzugsweise Ethylenglycol (EG), in wenigstens einer Reaktionsstufe, Vorpolykondensation des Ver-/Umesterungsprodukts unter einem Vakuum mittels einer aus einem vertikalen Reaktor bestehenden Reaktionsstufe und Polykondensation des Vorpolykondensationsprodukt in wenigstens einer Polykondensationsstufe, **dadurch gekennzeichnet, dass** das in den vertikalen Reaktor, in dem ein Druck von 10 bis 40 % des Diol-Gleichgewichtsdrucks des den Reaktor verlassenden Vorpolykondensationsprodukts herrscht, zulaufende Ver-/Umesterungsprodukt in freier Bewegung nacheinander zunächst wenigstens eine aus einer ringförmigen Rinne gebildeten erste Reaktionszone unter begrenzter Erwärmung durchströmt, danach in den radial außen oder den radial innen liegenden Ringkanal wenigstens einer aus einer in mehrere konzentrische Ringkanäle unterteilte ringförmige Rinne gebildeten zweiten Reaktionszone eingetragen, nacheinander durch die Ringkanäle zum Auslaß und dann in eine gerührte am Boden des Reaktors befindliche dritte Reaktionszone geleitet wird.

2. Verfahren nach Anspruch 1, **dadurch gekennzeichnet, daß** der Gesamtdruck des Reaktionsprodukts am Boden der Rinnen der ersten und zweiten Reaktionszone kleiner als der lokale Diol-Gleichgewichtsdrucks des Polykondensationsproduktes ist.

3. Verfahren nach einem der Ansprüche 1 und 2, **dadurch gekennzeichnet, daß** der Gesamtdruck des Reaktionsprodukts am Boden der Rinnen der ersten und zweiten Reaktionszone 5 bis 80 %, vorzugsweise 10 bis 70 %, des lokalen Diol-Gleichgewichtsdrucks des Polykondensationsproduktes beträgt.

4. Verfahren nach einem der Ansprüche 1 bis 3, **dadurch gekennzeichnet, daß** die in den drei Reaktionszonen gebildeten Brüden aus dem Reaktor gemeinsam abgezogen werden.

5. Verfahren nach einem der Ansprüche 1 bis 4, **dadurch gekennzeichnet, daß** die Brüden der ersten Reaktionszone einer Abscheidevorrichtung für die mitgerissenen Produkttröpfchen zugeführt werden, bevor sie mit den Brüden der beiden andern Reaktionsstufen vereinigt werden.

6. Verfahren nach einem der Ansprüche 1 bis 5, **dadurch gekennzeichnet, daß** das Reaktionsprodukt parallel gleichläufig durch benachbarte Ringkanäle der zweiten Reaktionszone geleitet wird.

7. Verfahren nach einem der Ansprüche 1 bis 5, **dadurch gekennzeichnet, daß** das Reaktionsprodukt parallel gegenläufig durch die Ringkanäle der zweiten Reaktionszone geleitet wird.

8. Verfahren nach einem der Ansprüche 1 bis 7, **dadurch gekennzeichnet, daß** das Produktniveau der gerührten dritten Reaktionszone geregelt wird.

9. Verfahren nach einem der Ansprüche 1 bis 8, **dadurch gekennzeichnet, daß** das Produktniveau in der Rinne der ersten Reaktionszone und in den Ringkanälen der zweiten Reaktionszone konstant gehalten wird.

10. Verfahren nach einem der Ansprüche 1 bis 9, **dadurch gekennzeichnet, daß** das Produktniveau in den Ringkanälen der zweiten Reaktionszone um einen Faktor 2 bis 3.5 niedriger ist als in der Rinne der ersten Reaktionszone.

11. Vorrichtung zur Durchführung des Verfahrens nach einem der Ansprüche 1 bis 10, **gekennzeichnet durch** ein in der Rinne der ersten Reaktionszone angeordnetes, in Strömungsrichtung verlaufendes Heizrohrregister, dessen Rohre in quer zur Strömungsrichtung angebrachten Kammerungsblechen gehaltert sind.

12. Vorrichtung nach Anspruch 11, **gekennzeichnet durch** einen über der Rinne der ersten Reaktionszone angebrachten geschlossenen Brüdensammelraum, dessen Austrittsöffnung mit einer Abscheidevorrichtung für die mitgerissenen Produkttröpfchen verbunden ist.

13. Vorrichtung nach den Ansprüchen 10 und 12, **gekennzeichnet durch** ein am Ende der Rinne der ersten Reaktionszone angeordnetes Überströmstaublech oder Überströmrohr.

14. Vorrichtung nach einem der Ansprüche 10 bis 13, **gekennzeichnet durch** ein am Ende eines jeden Ringkanals der zweiten Reaktionszone angeordnetes Überströmstaublech oder Überströmrohr.

15. Vorrichtung nach einem der Ansprüche 10 bis 14, **dadurch gekennzeichnet, daß** jedem Überströmstaublech oder Überströmrohr ein Unterströmstaublech oder ein Steigrohr vorgeschaltet ist.

16. Vorrichtung nach einem der Ansprüche 10 und 12, **gekennzeichnet durch** einen am Ende der Rinne der ersten Reaktionszone oder am Ende des letzten Ringkanals der zweiten Reaktionszone jeweils am tiefsten Punkt des Bodens angeordneten Schwanenhalsaustrag mit Drainage-Beipaß und Entlüftungsrohr.

17. Vorrichtung nach einem der Ansprüche 10 bis 16, **gekennzeichnet durch** ein am Ende der Rinne der ersten Reaktionsstufe oder am Ende eines jeden Ringkanals der zweiten Reaktionszone jeweils am tiefsten Punkt des Boden gelegene Drainageöffnung.

18. Vorrichtung nach einem der Ansprüche 10 bis 17, **dadurch gekennzeichnet, daß** in den Ringkanälen der zweiten Reaktionszone Leitbleche angeordnet sind.

19. Vorrichtung nach einem der Ansprüche 10 bis 18, **dadurch gekennzeichnet, daß** der Boden der Rinne der ersten und /oder der zweiten Reaktionszone 0.5 bis 6 °, vorzugsweise 1 bis 4 °, gegenüber der horizontalen Ebene geneigt ist.

20. Vorrichtung nach einem der Ansprüche 10 bis 19, **dadurch gekennzeichnet, daß** der Rührer für die dritte Reaktionszone aus einem bodenläufigen Impeller, Finger-, Rahmen- oder Trommelrührer jeweils mit vertikaler Antriebsachse besteht.

21. Vorrichtung nach einem der Ansprüche 10 bis 20, **dadurch gekennzeichnet, daß** der Rührer für die dritte Reaktionszone einen Drehscheibenrührer oder einem Reaktorkäfig jeweils mit horizontaler Antriebsachse beinhaltet.

22. Vorrichtung nach Anspruch 21, **dadurch gekennzeichnet, daß** der Drehscheibenrührer aus Loch-, Ring- oder Vollscheiben bestückt ist.

23. Vorrichtung nach Anspruch 22, **dadurch gekennzeichnet, daß** bei einer Drehscheibenkaskade der Einlaß für das Reaktionsprodukt je zur Hälfte an den axialen Enden und der gemeinsame Auslaß in der Mitte angebracht sind.

24. Vorrichtung nach Anspruch 22, **dadurch gekennzeichnet, daß** bei der Drehscheibenkaskade mit Lochscheiben der Einlaß für das Reaktionsprodukt an dem einen und der Auslaß an dem gegenüberliegenden Ende angebracht sind.

25. Vorrichtung nach einem der Ansprüche 10 bis 22, **gekennzeichnet durch** jeweils eine an den Enden der Rinnen und der Ringkanäle stationäre bodenseitig angebrachte Teilstromdrainage.

## Claims

1. A method for the continuous manufacture of polyesters(PES)by esterification/transesterification of dicarboxylic acids, preferably terephthalic acid or esters of dicarboxylic acids with diols, preferably ethylene glycol (EG), in at least one reaction stage, pre-condensation of the esterification/transesterification product under a vacuum by means of one of an existing vertical reactor reaction stage and polycondensation of the pre-polycondensation product in at least one polycondensation stage, **characterized in that** that governs the pre-polycondensation product exiting the reactor, in the vertical reactor, in which a pressure of between 10 and 40 % of the diol equilibrium pressure, leading to the esterification/transesterification product in free movement one after the other to begin with at least one of a first reaction zone formed by an annular channel flows through with limited heating after that in the radially located exterior or interior ring channel at least one of the divided ring-shaped channels incorporated one after the other in a plurality of concentric ring channels of a second reaction zone by the ring channels at the outlet and then is fed into an agitated third reaction zone located at the base of the reactor.

2. The method according to Claim 1, **characterized in that** the total pressure of the reaction product at the base. of the channels of the first and second reaction zones is smaller than the local diol equilibrium pressure of the polycondensation product.

3. The method according to one of Claims 1 and 2, **characterized in that** the total pressure of the reaction product at the base of the channels of the first and second reaction zones amounts to 5 to 80 %, preferably 10 to 70 % of the local diol equilibrium pressure of the polycodensation product.

4. The method according to Claims 1 through 3, **characterized in that** the exhaust vapors formed in the three reaction zones are removed together.

5. The method according to Claims 1 through 4, **characterized in that** the exhaust vapors of the first reaction zone are fed into a separator device for the product droplets carried-over, before they are combined with the exhaust vapors from the two other reaction stages.

6. The method according to one of Claims 1 through 5, **characterized in that** the reaction product is channeled synchronously in parallel through adjacent annular channels of the second reaction zone.

7. The method according to one of Claims 1 through 5, **characterized in that** the reaction product is channeled synchronously in parallel through the annular channels of the second reaction zone.

8. The method according to one of Claims 1 through 7, **characterized in that** the product level of the agitated third reaction zone is controlled.

9. The method according to one of Claims 1 through 8, **characterized in that** the product level in the channel of the first reaction zone and in the annular channel of the second reaction zone is held constant.

10. The method according to one of Claims 1 through 9, **characterized in that** the product level in the annular channel of the second reaction zone is smaller by a factor of 2 to 3.5 than in the channel of the first reaction zone.

11. A device for carrying out the method according to one of Claims 1 through 10, **characterized by** a running heating pipe register in the channel of the first reaction zone whose pipes are arranged in the appropriate chamber enclosure sheets transversely to the direction of flow.

12. The device according to Claim 11, **characterized by** having a suitable closed exhaust gas receiver over the channel of the first reaction zone whose outlet orifice is connected with a separator device for the product droplets carried over.

13. The device according to Claims 10 and 12, **characterized by** an appropriate overflow baffle plate or overflow pipe at the end of the channel of the first reaction zone.

14. The device according to one of Claims 10 through 13, **characterized by** an appropriate overflow baffle plate or overflow pipe at the end of each ring channel of the second reaction zone.

15. The device according to one of Claims 10 through 14, **characterized by** the fact that an underflow baffle plate or a riser is installed upstream to each overflow baffle plate or overflow pipe.

16. The device according to one of Claims 10 and 12, **characterized by** an appropriate swan neck discharge with drainage bypass and vent pipe at the end of the channel of the first reaction zone or at the end of the last annular channel of the second reaction zone, in each case with a drainage opening located at the deepest point of the base.

17. The device according to one of Claims 10 through 16, **characterized by** a drainage opening at the end of the channel of the first reaction zone or at the end of the last annular channel of the second reaction zone, located in each case at the deepest point of the base.

18. The device according to one of Claims 10 through 17, **characterized in that** baffle plates are arranged in the annular channels of the second reaction zone.

19. The device according to one of Claims 10 through 18, **characterized in that** the base of the channel of the first and/or the second reaction zone is inclined 0.5 to 6°, and preferably 1 to 4° to the horizontal.

20. The device according to one of Claims 10 through 19, **characterized in that** the agitator for the third reaction zone comprises a base operated impeller finger-frame or drum agitator with a vertical drive shaft.

21. The device according to one of Claims 10 through 20, **characterized in that** the agitator for the third reaction zone contains a turntable agitator or a reactor cage in each case with a horizontal drive shaft.

22. The device according to Claim 21, **characterized in that** the turntable agitator is equipped with perforated, ring or full discs.

23. The device according to Claim 22, **characterized in that** in a turntable cascade the intake for the reaction product are each suitable for half at the shaft ends and in the middle of the common outlet.

24. The device according to Claim 23, **characterized in that** in a turntable cascade with perforated discs the inlet for the reaction product at the one and the outlet at the ends facing are appropriate.

25. The device according to one of Claims 10 through 22 **characterized by** each one having respectively at the ends of the channels and the annular channels suitable stationary partial base-sided drainage.

## Revendications

1. Procédé pour la préparation en continu de polyesters (PES) par estérification complète ou partielle d'acides dicarboxyliques, de préférence d'acide téréphtalique, respectivement d'esters d'acides dicarboxyliques, par des diols, de préférence l'éthylèneglycol (EG), en au moins une étape réactionnelle, par pré-polycondensation du produit d'estérification complète ou partielle sous vide au moyen d'une étape réactionnelle dans un réacteur vertical et par polycondensation du produit de la pré-polycondensation en au moins une étape de polycondensation, **caractérisé en ce que** le produit d'estérification complète ou partielle arrivant dans le réacteur vertical, dans lequel règne une pression de l'ordre de 10 à 40 % de la pression d'équilibre, relative au diol, du produit de la pré-polycondensation quittant le réacteur traverse librement et successivement d'abord au moins une première zone réactionnelle de réchauffement limité et constituée d'un conduit annulaire, **en ce qu'**il est ensuite introduit dans le canal annulaire, à orientation radiale extérieure ou intérieure, d'au moins une seconde zone réactionnelle constituée d'un conduit annulaire subdivisé en plusieurs canaux annulaires concentriques, **en ce qu'**il est guidé de suite à travers les canaux annulaires vers l'évacuation, puis amené dans une troisième zone réactionnelle se trouvant au fond du réacteur et soumise à une agitation.

2. Procédé selon la revendication 1, **caractérisé en ce que** la pression totale du produit réactionnel au fond des conduits de la première et de la seconde zone réactionnelle est inférieure à la pression locale d'équilibre, relative au diol, du produit de la polycondensation.

3. Procédé selon la revendication 1 ou 2, **caractérisé en ce que** la pression totale du produit réactionnel au fond des conduits de la première et de la seconde zone réactionnelle est de l'ordre de 5 à 80 %, de préférence de 10 à 70 %, de la pression locale d'équilibre, relative au diol, du produit de la polycondensation.

4. Procédé selon l'une des revendications 1 à 3, **caractérisé en ce que** les fractions de vapeur d'eau formées dans les trois zones réactionnelles sont soutirées ensemble hors du réacteur.

5. Procédé selon l'une des revendications 1 à 4, **caractérisé en ce que** la fraction de vapeur d'eau issue de la première zone réactionnelle est alimentée vers un dispositif de séparation pour les gouttelettes entraînées, avant qu'elle soit réunie avec les fractions de vapeur d'eau des deux autres étapes réactionnelles.

6. Procédé selon l'une des revendications 1 à 5, **caractérisé en ce que** le produit réactionnel est guidé, selon un processus à courants parallèles, à travers les canaux annulaires voisins de la seconde zone réactionnelle.

7. Procédé selon l'une des revendications 1 à 5, **caractérisé en ce que** le produit réactionnel est guidé, selon un processus à contre-courants, à travers les canaux annulaires voisins de la seconde zone réactionnelle.

8. Procédé selon l'une des revendications 1 à 7, **caractérisé en ce que** le niveau du produit de la troisième zone réactionnelle soumise à une agitation est régulé.

9. Procédé selon l'une des revendications 1 à 8, **caractérisé en ce que** le niveau du produit dans le conduit de la première zone réactionnelle et dans les canaux annulaires de la seconde zone réactionnelle est maintenu constant.

10. Procédé selon l'une des revendications 1 à 9, **caractérisé en ce que** le niveau du produit dans les canaux annulaires de la seconde zone réactionnelle est plus bas d'un facteur de 2 à 3,5 que celui dans le conduit de la première zone réactionnelle.

11. Dispositif pour l'exécution du procédé selon l'une des revendications 1 à 10, **caractérisé par** un registre de tubes chauffants s'étendant dans le sens de l'écoulement et disposé dans le conduit de la première zone réactionnelle, les tubes chauffants étant maintenus dans des tôles formant chambre et implantées transversalement au sens de l'écoulement.

12. Dispositif selon la revendication 11, **caractérisé par** un espace fermé de collecte des fractions de vapeur d'eau, implanté au-dessus du conduit de la première zone réactionnelle et dont l'ouverture de sortie communique avec un dispositif de séparation pour les gouttelettes entraînées.

13. Dispositif selon les revendications 10 et 12, **caractérisé par** une tôle accumulatrice de trop-plein ou par un tube de trop-plein, disposé(e) à l'extrémité du conduit de la première zone réactionnelle.

14. Dispositif selon l'une des revendications 10 à 13, **caractérisé par** une tôle accumulatrice de trop-plein ou par un tube de trop-plein, disposé(e) à l'extrémité d'un canal annulaire unitaire de la seconde zone réactionnelle.

15. Dispositif selon l'une des revendications 10 à 14, **caractérisé en ce qu'**avec chaque tôle accumulatrice de trop-plein ou chaque tube de trop-plein est associé(e) une tôle accumulatrice de sous-débit ou un tube de remontée.

16. Dispositif selon l'une des revendications 10 et 12, **caractérisé par** une évacuation en col de cygne, avec by-pass de purge et tube de dégazage, disposée à l'extrémité du conduit de la première zone réactionnelle ou à l'extrémité du dernier canal annulaire de la seconde zone réactionnelle, chaque fois au point le plus bas du fond.

17. Dispositif selon l'une des revendications 10 à 16, **caractérisé par** une ouverture de purge, située à l'extrémité du conduit de la première zone réactionnelle ou à l'extrémité du dernier canal annulaire de la seconde zone réactionnelle, chaque fois au point le plus bas du fond.

18. Dispositif selon l'une des revendications 10 à 17, **caractérisé en ce que** dans les canaux annulaires de la seconde zone réactionnelle sont disposées des tôles de guidage.

19. Dispositif selon l'une des revendications 10 à 18, **caractérisé en ce que** le fond du conduit de la première et/ou de la seconde zone réactionnelle est incliné de 0,5 à 6 °, de préférence de 1 à 4 °, par rapport au plan horizontal.

20. Dispositif selon l'une des revendications 10 à 19, **caractérisé en ce que** l'agitateur pour la troisième zone réactionnelle est constitué par un agitateur à impulseur, à doigts, à cadre ou à tambour rotatif, chaque fois avec un axe d'entraînement vertical.

21. Dispositif selon l'une des revendications 10 à 20, **caractérisé en ce que** l'agitateur pour la troisième zone réactionnelle implique un agitateur à disques rotatifs ou une cage de réacteur, chaque fois avec un axe d'entraînement horizontal.

22. Dispositif selon la revendication 21, **caractérisé en ce que** l'agitateur à disques rotatifs est équipé de disques perforés, de disques annulaires ou de disques pleins.

23. Dispositif selon la revendication 22, **caractérisé en ce que** dans le cas d'une cascade de disques rotatifs on implante l'admission destinée au produit réactionnel en deux parties formant moitié et situées aux extrémités axiales et **en ce qu'**on implante l'évacuation commune dans la zone médiane.

24. Dispositif selon la revendication 22, **caractérisé en ce que** dans le cas d'une cascade de disques rotatifs avec disques perforés, on implante l'admission destinée au produit réactionnel à l'une des extrémités axiales et l'évacuation à l'extrémité opposée.

25. Dispositif selon l'une des revendications 10 à 22, caractérisé dans tous les cas par une purge partielle, implantée de manière fixe vers le fond du réacteur et aux extrémités des conduites et des canaux annulaires.
